# FASCICULE DE BREVET EUROPEEN

(11) **EP 0 608 375 B1**
(45) Date de publication et mention de la délivrance du brevet: **28.08.1996**
(21) Numéro de dépôt: 92923130.6
(22) Date de dépôt: 13.10.1992
(51) Int. Cl.: G02B 5/08

(54) **MIROIR DIELECTRIQUE INTERFERENTIEL ET PROCEDE DE FABRICATION D'UN TEL MIROIR**
DIELEKTRISCHER INTERFERENZSPIEGEL UND HERSTELLUNGSVERFAHREN EINES DERARTIGEN SPIEGELS
DIELECTRIC INTERFERENCE MIRROR AND METHOD FOR MAKING SAME

(30) Priorité: 15.10.1991 FR 9112685
(43) Date de publication de la demande: 03.08.1994
(73) Titulaire: COMMISSARIAT A L'ENERGIE ATOMIQUE, 75015 Paris (FR)
(72) Inventeur: FLOCH, Hervé 4 ter, résidence "Les Cèdres", F-91800 Brunoy (FR); BERGER, Michel, F-75010 Paris (FR)
(74) Mandataire: Dubois-Chabert, Guy
(86) Numéro de dépôt international: FR9200962
(87) Numéro de publication internationale: WO9308490

(56) Documents cités:
- FR-A- 2 549 968
- CERAMIC BULLETIN vol. 69, no. 7, 1990, pp. 1141-1143; H.G. FLOCH and J. PRIOTTON: 'Colloidal sol-gel optical coatings'
- Week 8549, Derwent Publications Ltd., London, GB; AN 85-307423 & JP-A-60 214 302
- PATENT ABSTRACTS OF JAPAN vol. 11, no. 22 (P-538) 21 Janvier 1987 & JP-A-61 196 201

## Description

La présente invention concerne un miroir diélectrique interférentiel, ainsi que son procédé de fabrication.

Les miroirs diélectriques interférentiels comprennent un substrat recouvert d'un film diélectrique qui réfléchit une ou plusieurs longueurs d'onde souhaitées tout en présentant une absorption intrinsèque relativement faible comparativement aux métaux classiquement utilisés.

De préférence, l'invention concerne les miroirs diélectriques passifs mono ou polychroiques réfléchissant des longueurs d'onde allant du proche ultraviolet au proche infrarouge.

Les miroirs diélectriques interférentiels peuvent être utilisés plus précisément dans des systèmes lasers de forte puissance, dans des applications solaires thermiques et photovoltaiques ou encore dans des systèmes optiques intégrés.

On connait déjà un certain nombre de procédés permettant de réaliser des films diélectriques transparents et de les déposer sur des substrats non métalliques.

Les brevets allemands 736 411 et 937 913 mentionnent l'emploi de composés hydrolysables pour la préparation de films interférentiels divers. L'inconvénient majeur de ces procédés réside dans l'indispensable traitement thermique entre 500 et 600°C pour convertir les intermédiaires polymériques en céramiques finales denses. Ces températures élevées limitent le choix de la nature du substrat à revêtir.

Le brevet U.S. 2 584 905 traite de la préparation de couches minces réfléchissantes à partir de solutions alcooliques de TiCl₄ et d'un alkoxyde de silicium. La encore, il est nécessaire de recourir à une étape de traitement thermique permettant de densifier de façon convenable les oxydes. Dans ce procédé, les problèmes de faïençage et d'écaillage liés à la densification des matériaux, réduisent considérablement l'élaboration d'édifices multicouches à haute réflexion.

Le brevet U.S. 3 460 956 décrit la préparation de films réfléchissants en TiO₂ à partir d'hydrolysats de tétraalkyle titanates, en milieu alcoolique. Là encore, pour une conversion efficace en oxyde dense, du film polymérique, ce dernier doit subir un chauffage élevé, aux environs de 500°C, donc pénalisant et préjudiciable pour tout substrat organique.

Les brevets U.S. 2 768 909 et 2 710 267 décrivent la production de films réfléchissants en TiO₂ à partir de sols alcooliques d'un alkoxyde de titane, ces sols étant hydrolysables par l'humidité atmosphérique. Cette approche requiert également une forte cuisson des intermédiaires condensés.

Le brevet U.S. 4 272 588 concerne la possibilité d'accroître la réflectivité de miroirs en métaux nobles ainsi que la possibilité de rendre chimiquement passif ces derniers, par le dépôt des couches de diélectriques TiO₂ et Ta₂O₅ issus de précurseurs moléculaires. De tels revêtements sont obtenus par un chauffage obligatoire aux environs de 400°C.

L'emploi de particules colloïdales submicroscopiques pour la préparation de films optiques microporeux remonte à environ une quarantaine d'années et a été décrite notamment dans le brevet U.S. 2 432 484. Ce document décrit l'utilisation de colloïdes de SiO₂ synthétisés à partir d'un alkoxyde de silicium en solution, et/ou d'un silicate sodique, pour l'obtention de films antireflet. Environ 35 ans plus tard, un autre brevet U.S. 4 271 210 décrit l'utilisation de la voie colloidale pour l'élaboration de couches minces optiques. Le procédé décrit dans ce brevet consiste à synthétiser et à déposer des films microgranulaires d'alumine hydratée comme antireflet sur un substrat vitreux. Ce procédé comprend un traitement thermique entre 300 et 500°C afin d'obtenir l'oxyde métallique, ce qui limite les substrats pouvant être utilisés.

Par ailleurs, on connaît également des procédés de dépôt de ces couches colloidales. Ainsi, un article intitulé "Colloïdal Sol-Gel Optical Coatings" paru dans "Ceramic Bulletin", vol.69, n°7, pp.1141 à 1143 (1990), décrit la possibilité de réaliser le dépôt de plusieurs couches de matières colloidales par enduction centrifuge, afin de fabriquer les composants optiques d'un laser. Cet article précise qu'en utilisant des suspensions colloidales sol-gel et qu'en choisissant judicieusement des solvants volatils pour constituer la phase liquide du milieu colloidal, il est possible d'effectuer des traitements à température ambiante, sans chauffage excessif du substrat. Cette technique permet donc de traiter des matériaux thermiquement fragiles.

Par ailleurs, dans le domaine de la réplication des surfaces optiques, la préparation de miroirs métalliques remonte à plus de 40 ans. Le brevet U.S. 2 444 533 concerne un procédé de copie de surface par moulage-démoulage pour l'obtention de substrats concaves de qualité optique.

Le brevet FR 2 061 847 concerne la réplication chimique de surfaces optiques pour la fabrication de miroirs métalliques plans.

Les brevets FR 2 310 308 et FR 2 310 477 décrivent la réalisation de réflecteurs métalliques répliqués, pour des dispositifs générateurs d'électricité par concentration de l'énergie solaire.

Enfin, une méthode de réplication de surface avec des résines époxydes et en utilisant un agent de démoulage métallique est décrite dans l'article de Assus (J. of Optics, vol.20, n°5, pp.219-223, 1989) tandis qu'un procédé de moulage avec une résine polymérisant sous l'action des rayonnements ultra-violet et un agent de démoulage chimique est décrit dans l'article de Mahé et Marioge (J. of Optics, vol.19, n°2, pp.83-91, 1988).

La plupart des techniques concernant le traitement réfléchissant des surfaces qui viennent d'être citées présentent l'inconvénient de nécessiter un chauffage à des températures élevées et donc de limiter les substrats auxquels ce type de traitement peut être appliqué. Par ailleurs, aucune des techniques de l'art antérieur ne permet vraiment par un procédé en solution, de réaliser des miroirs diélectriques ayant simultanément une bonne résistance au flux laser, une surface importante et un coût de fabrication faible. En outre, on ne connaît pas non plus de procédé permettant de réaliser ces miroirs diélectriques répliqués en grande série, avec des moyens matériels peu sophistiqués et avec de faibles coûts de production.

L'invention a donc pour but de réaliser des miroirs diélectriques conformes à ces exigences.

A cet effet, l'invention concerne un miroir diélectrique interférentiel comprenant un substrat plan recouvert d'au moins une première couche de colloides et d'au moins une deuxième couche de colloïdes, la première couche ayant un indice de réfraction inférieur à celui de la deuxième couche, ces deux types de couches étant disposés de façon alternée caractérisé en ce que le substrat plan est un substrat plan douci dont la surface de recouvrement comporte une couche (4) d'une résine thermoplastique moulée par replication.

Les miroirs ainsi obtenus présentent simultanément de bonnes qualités optiques obtenues par la réplication de surfaces optiques, ainsi qu'une bonne tenue au flux laser et une réflectivité durable. Les milieux colloidaux à fort ou à faible indice de réfraction sont stables généralement plusieurs mois, voire même plusieurs années. Une fois déposée et séchée, une couche de colloides ne repasse plus en suspension même si elle est de nouveau imprégnée par une solution traitante.

De préférence, les colloïdes de la première couche sont choisis parmi le fluorure de calcium ou le fluorure de magnésium ou mieux encore l'oxyde de silicium.

De même, préférentiellement, les colloides de la deuxième couche sont choisis parmi les oxydes de titane, de zirconium, d'hafnium, de thorium, de tantale, de niobium, d'yttrium, de scandium ou de lanthane ou mieux encore parmi les oxydes d'aluminium. Toutefois, il faut noter que les précurseurs nécessaires pour préparer les suspensions colloidales des oxydes d'yttrium, de scandium ou de lanthane sont coûteux et seront donc moins souvent utilisés pour ces raisons.

L'utilisation de ces oxydes spécifiques permet de réaliser des dépôts épais par de multiples applications alternées et consécutives, tout en obtenant des miroirs exempts de craquelures et/ou de plans de clivage internes, même pour une épaisseur totale de couches sol-gel voisine de 8 microns. De plus, il est possible de réaliser un grand nombre de combinaisons de couches alternées.

De façon avantageuse, l'épaisseur des deux types de couches varie entre 50 nm et 250 nm suivant l'indice de réfraction du matériau et la longueur d'onde de travail visée. Les deux types de couches présentent des épaisseurs différentes afin de réaliser des miroirs susceptibles de travailler à des incidences normales ou obliques, à une longueur d'onde λ désirée.

Dans l'invention, le diamètre des colloïdes se situe dans une gamme variant de 5 à 40 nm environ. Ceci autorise les applications optiques du proche ultraviolet au proche infrarouge avec des diffusions spéculaires réduites.

Selon une caractéristique avantageuse de l'invention le substrat est répliqué avec une résine thermoplastique choisie parmi les résines du type époxyde, diglycidyl-éther bisphénolique, glycidyl-ester, glycidyl-amide, glycidyl-amine, silicone-glycidyle, thioglycidyle ou fluoroglycidyle.

Enfin, les deux types de couches à indices de réfraction différents peuvent comprendre de façon avantageuse un agent tensio-actif non ionique choisi parmi les alkyl phénoxy polyéthoxy éthanols ou les polyglycol éthers.

L'emploi de ces agents tensio-actifs est remarquablement efficace pour obtenir des films bien uniformes.

En outre, l'invention concerne également un procédé de fabrication de ce miroir diélectrique interférentiel.

Selon les caractéristiques de l'invention, ce procédé consiste à :
- revêtir un substrat maitre d'un agent de démoulage,
- emprisonner entre le substrat maître et un substrat plan douci une résine thermoplastique,
- polymériser et réticuler ladite résine,
- séparer le substrat maître du substrat répliqué,
- préparer une première suspension colloïdale,
- préparer une deuxième suspension colloïdale de colloides à indice de réfraction supérieur à celui de la première suspension,
- déposer sur le substrat répliqué, à température ambiante, alternativement une couche de chaque suspension colloïdale,
- procéder au séchage de chaque couche après son dépôt.

La préparation de surfaces planes de qualité optique en utilisant une technique de réplication plutôt qu'une technique de polissage classique, permet une fabrication en grande série, donc bien meilleur marché.

De plus, le procédé selon l'invention utilisant la voie colloidale a la particularité d'autoriser des dépôts directement à la température ambiante. Cette particularité est un atout quasi-unique puisqu'elle ouvre les portes au traitement de substrats thermiquement fragiles tels que plastiques et autres. Un substrat répliqué n'est en fait qu'un support en verre ou autre dont la surface a été moulée avec un film plastique, d'où l'excellente synergie et la complémentarité du sol-gel avec la technique de réplication pour la réalisation peu onéreuse de miroirs en série.

Selon les caractéristiques de l'invention, la première suspension colloïdale comprend des colloides choisis parmi L'oxyde de silicium, le fluorure de calcium ou le fluorure de magnésium et dispersés dans un solvant.

La deuxième suspension colloidale comprend des colloides choisis parmi l'oxyde d'aluminium, l'oxyde de titane, l'oxyde de zirconium, l'oxyde d'hafnium, l'oxyde de thorium, l'oxyde de tantale, l'oxyde de niobium, l'oxyde d'yttrium, l'oxyde de scandium ou l'oxyde de lanthane et dispersés dans un solvant.

De préférence, le solvant est choisi parmi les alcools aliphatiques saturés de formule ROH où R représente un alkyle ayant de 1 à 4 atomes de carbone. L'usage de solutions traitantes alcooliques rend possible le traitement éventuel d'un substrat hygroscopique.

Selon les caractéristiques préférées de l'invention le dépôt de couche de colloïdes est effectué par enduction centrifuge.

Le procédé de traitement par enduction centrifuge permet de traiter des surfaces relativement grandes et donc d'offrir des capacités d'industrialisation en série assez séduisantes. En outre, ces techniques d'enduction centrifuge nécessitent l'emploi de matériel peu sophistiqué et des conditions opératoires standards. En conséquence, le coût du traitement final est très avantageux comparé aux techniques d'évaporation classique. Les techniques d'enduction centrifuge sont en effet d'environ 5 à 10 fois moins chères que les techniques classiques. De préférence, l'agent de démoulage est choisi parmi les silicones, les polymères fluorés ou les sucroses.

L'utilisation d'un agent de démoulage de nature chimique, en solution, permet de traiter facilement le substrat maître par simple trempage de celui-ci et s'avère donc bien adapté et plus rentable pour une fabrication de pièces en série à partir d'un même maître, que les techniques de l'art antérieur utilisant un agent de démoulage métallique. En effet, lorsqu'on utilise un agent de démoulage métallique, il est indispensable de réaliser une opération d'évaporation sous vide de ce métal avant chaque réplication. Cette technique est donc plus compliquée. Toutefois, dans certaines applications particulières, on peut utiliser des agents métalliques.

La résine thermoplastique permettant la réplication du substrat est choisie parmi les résines précédemment citées.

Les caractéristiques de l'invention apparaîtront mieux à la lecture de la description suivante d'un mode de réalisation préférentielle de l'invention, donné à titre illustratif, cette description est en faite en référence aux dessins joints :
- la figure 1 représente une coupe schématique d'un mode de réalisation du miroir diélectrique selon la présente invention,
- la figure 2 représente de façon schématique les différentes étapes du procédé de réplication des substrats, et
- la figure 3 représente de façon schématique les différentes étapes du procédé de traitement réfléchissant du substrat selon l'invention.

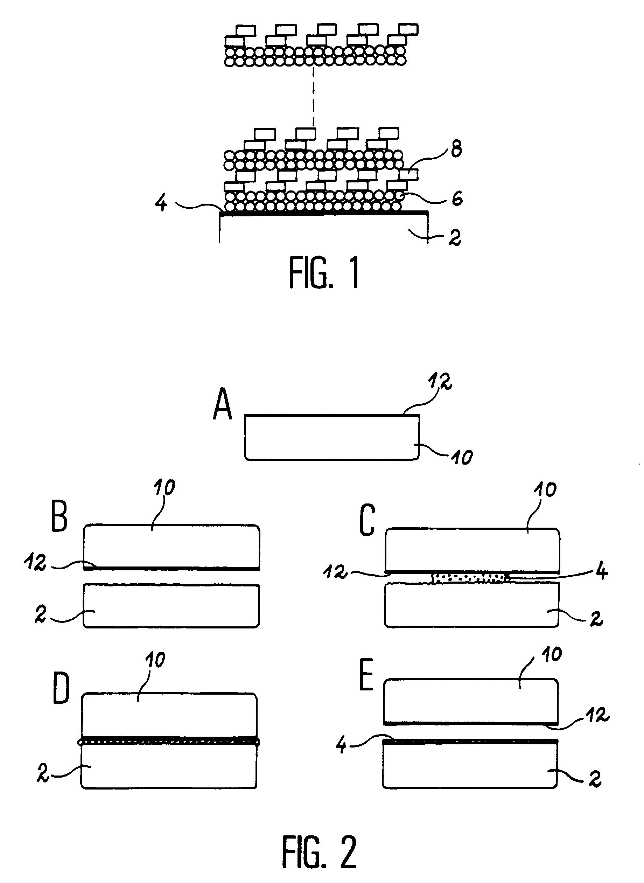

Comme illustré en figure 1, le miroir diélectrique selon l'invention comprend un substrat douci plan 2 dont la surface a été répliquée avec une résine thermoplastique 4 adaptée, selon un procédé qui sera décrit ultérieurement. Ce substrat 2 est recouvert d'au moins une première couche 6 de colloides, et d'au moins une deuxième couche 8 de colloides à indice de réfraction supérieur à celui de ladite première couche.

Les deux types de couches de colloïdes sont disposées de façon alternée.

Le substrat 2 selon l'invention peut être de nature organique ou inorganique et plus précisément siliceux, métallique ou encore céramique. Des essais ont été réalisés sur des substrats vitreux bon marché, du type borosilicate, de marques déposées BK-7, Pyrex, Zérodur et Duran 50.

De préférence, les colloïdes sont choisis parmi ceux qui ont été cités précédemment.

Le procédé de fabrication des miroirs diélectriques interférentiels selon l'invention va maintenant être décrit.

Le procédé selon l'invention comprend une première série d'étapes consistant à réaliser la réplication du substrat et une deuxième série d'étapes consistant à déposer des solutions colloïdales d'indices de réfraction différents sur ledit substrat ainsi préparé.

La figure 2 illustre la première série d'étapes concernant la réplication du substrat.

La réplication d'un substrat consiste à reproduire le plus fidèlement possible en planéité et en rugosité la surface d'une pièce de référence appelée le plus souvent substrat maître et référencée 10 sur la figure 2. Ce substrat maître 10 est généralement réalisé en silice, en borosilicate, ou en vitro-céramique (par exemple celle de marque déposée Zérodur). La réplication de la surface se fait par l'usage d'un matériau malléable disposé sur un substrat médiocre (référence 2). On transfert ainsi sur une surface aux caractéristiques grossières de nouvelles caractéristiques de qualité, par l'intermédiaire d'un médiateur moulable.

La toute première étape, correspondant à la partie A de la figure 2, consiste à préparer la surface étalon du substrat maître 10 en y déposant un agent de démoulage 12 indispensable à la séparation ultérieure du substrat maître 10 et du substrat répliqué 2. Les techniques utilisées pour réaliser cette réplication sont des techniques connues et décrites dans les documents de l'art antérieur cités dans l'introduction. Il est donc possible d'utiliser comme agent de démoulage 12, un film métallique le plus souvent en argent ou en or comme cela est décrit dans la méthode d'Assus dont la référence a été donnée ci-dessus ou d'utiliser un agent chimique comme un silicone, un fluoropolymère ou certains sucroses selon la méthode de Mahé-Marioge décrite précédemment. Comme cela a déjà été expliqué, cette seconde méthode est mieux adaptée à la réalisation de pièces en série à partir d'un même substrat maître 10 et en conséquence on préférera utiliser dans l'invention un agent de démoulage chimique.

L'étape suivante, correspondant à la partie B de la figure 2, consiste à présenter en face du substrat maître 10 revêtu de la couche d'agent de démoulage 12, le substrat 2 à répliquer.

Une troisième étape, représentée dans la partie C de la figure 2, consiste à emprisonner entre le substrat maître 10 et le substrat à répliquer 2 simplement douci, la résine 4 pâteuse, mais suffisamment fluide pour mouler fidèlement la surface étalon du substrat maître 10.

Les résines utilisées sont celles qui ont été citées précédemment. Toutefois parmi celles-ci, on préfère utiliser des résines époxydes du type glycidyl-éther cycloaliphatique ou des résines du type diglycidyl-éther bisphénoliques.

La quatrième étape du procédé décrite dans la partie D de la figure 2 consiste, après avoir injecté la quantité exacte de résine 4 nécessaire, entre les deux pièces 10 et 2, à effectuer un pressage isostatique et isotherme dans de bonnes conditions de propreté (salle de classe 10 000 minimum, norme U.S.). Au cours de cette étape, la polymérisation radicalaire et la réticulation de la résine commencent. Cette phase de polymérisation et de réticulation dure entre 24 et 48 heures suivant le type de résine choisie.

Les durcisseurs utilisés pour polymériser ces résines sont surtout des anhydrides carboxyliques cycliques ou encore des acides ou des bases de Lewis.

Enfin, la cinquième étape du procédé représentée par la partie E de la figure 2, consiste à séparer mécaniquement le substrat maître 10 du substrat répliqué 2. La résine 4 correspondant à l'empreinte du substrat maître 10, se présente alors sur le substrat répliqué 2 sous forme d'une couche d'une épaisseur de 20 à 100 µm. A titre d'exemple, par la méthode utilisant un agent de démoulage chimique, on peut répliquer 20 à 30 pièces avec un seul substrat maître. De même, il est également possible de répliquer des surfaces planes qui ne soient pas circulaires.

On prépare ensuite les solutions colloidales formant les couches de revêtement du substrat répliqué 2. Les sols ou suspensions colloidales sont des milieux hétérogènes constitués d'une phase liquide, (le solvant) et d'une phase solide, (les colloïdes composant le dépôt). Une simple évaporation du solvant suffit alors à créer le film microparticulaire final. Les colloides laissés sur la surface du substrat forment alors un film poreux dont l'indice de réfraction est nettement inférieur au même film dense.

Les colloides utilisés sont ceux précédemment décrits.

Les suspensions colloïdales préparées dans l'invention sont issues de précurseurs ioniques (sels d'acides) purifiés par recristallisation ou de précurseurs moléculaires (alkoxydes) purifiés par distallation. De préférence ces sols sont fabriqués respectivement selon les méthodes de Stober (J. Colloïd Interface Sci., 26, pp.62-69, 1968) pour SiO₂, de Thomas (Appli. Opt. 26, 4688, 1987) pour TiO₂, de Clearfield (Inorg. Chem., 3, 146, 1964) pour ZrO₂ et HfO₂, de O'Connor (brevet U.S. 3 256 204, 1966) pour ThO₂, de Yoldas (Am. Cer. Soc. Bull.54, 289, 1975) pour ALOOH, de S. Parraud (MRS, Better Ceramics Through Chemistry 1991) pour Ta₂O₅ et Nb₂O₅, et enfin de Thomas (Appl. OPt., 27, 3356, 1988) pour CaF₂ et MgF₂.

Les précurseurs ioniques sont choisis le plus souvant parmi les chlorures, les oxychlorures, les perchlorates, les nitrates, les oxynitrates ou encore les acétates.

Les précurseurs moléculaires sont de préférence choisis parmi les alkoxydes, de formule molaire M(OR)ₙ (M représentant un métal, OR un radical alkoxy de 1 à 6 atomes de carbone et n représentant la valence du métal). Dans les méthodes décrites précédemment, le précurseur est hydrolysé ou fluoré puis polymérisé jusqu'à l'obtention d'un produit fini, insoluble dans le solvant choisi, nucléé et appelé suspension colloidale. Dans le cas des alkoxydes, l'hydrolyse doit être rigoureusement contrôlée étant donné le caractère très hydrophyle de ces dérivés organométalliques.

On utilisera de préférence dans l'invention des solvants de nature aliphatique saturé ROH avec un groupe alkyle R de 1 à 4 carbones. Il est également possible d'utiliser des alcools à nombre de carbones plus élevé mais ceci conduit à des films plus épais.

De préférence, ces suspensions colloidales contiennent une concentration en solides (colloides) variant de 1 à 10 % en masse de la solution totale. Elles présentent des viscosités comprises entre 2 et 5 centipoises (2 à 5 mPa.s) et des tensions de surface variant entre 25 et 35 dynes.cm⁻¹, (25 à 35 mN/m).

En outre, on notera que chaque suspension colloïdale doit être méticuleusement filtrée, avant utilisation, sur une membrane en fibre de verre ou en téflon (marque déposée, fabriquée par E.I. du Pont de Nemours & Co. Witmington, DE), suivant le cas.

Les solutions obtenues présentent un aspect opalescent ou translucide, caractéristique de la nature colloïdale de la phase dispersée.

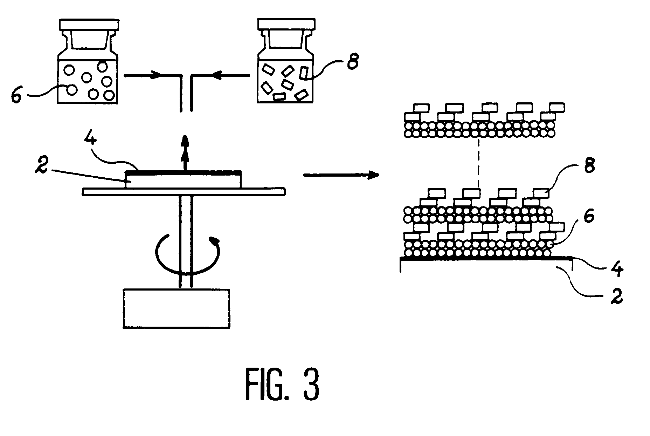

Les solutions colloïdales préparées et filtrées sont déposées sur la surface du substrat répliqué 2 recouvert de sa couche de résine 4 par une méthode d'épendage centrifuge, (voir figure 3). Les dépôts pourraient également s'effectuer par trempage ou encore par pulvérisation. Toutefois dans l'invention, l'épendage centrifuge est préféré du fait que cette méthode de dépôt permet de traiter des surfaces relativement grandes avec très peu de produit.

De façon typique, on dépose successivement les deux types de suspensions colloidales sur le substrat 2 en rotation à une vitesse comprise entre 350 et 1000 tr/min.

Sur la figure 3, on a représenté arbitrairement comme première couche déposée sur le substrat, la première couche 6 à indice de réfraction inférieur à celui de la deuxième couche 8, puis une succession de couches 8 et 6 alternées, toutefois l'inverse pourrait également être réalisé.

Après le dépôt de chaque couche 6, 8 on procède à une étape de séchage à une température comprise entre 40°C et 60°C, de préférence voisine de 60°C, par exemple sous une lampe infrarouge pendant 5 à 20 minutes.

En faisant varier la vitesse de rotation ou la concentration en soluté des sols traitants, on modifie l'épaisseur du revêtement. Ainsi, si la vitesse de rotation diminue et/ou si la concentration en colloides augmente, alors le film déposé est plus épais et inversement.

En fonction de la nature de la réponse spectrale désirée à une incidence donnée, les couches 6 et 8 présenteront une épaisseur optique λ/4 ou non, λ représentant la longueur d'onde de l'onde incidente.

Les épaisseurs de chaque couche à fort ou à faible indice de réfraction varient entre 50 et 250 nm.

En fonction de la différence d'indice de réfraction entre les deux types de couches 6, 8, on disposera un nombre plus ou moins important de couches 6 et 8 alternées afin d'atteindre la réflectivité souhaitée. A titre d'exemple, dans le sytème TiO₂-SiO₂ ou TiO₂-CaF₂, la différence d'indice de réfraction est d'environ 0,75 entre les couches 6 et 8 et il faut une quinzaine de couches au total pour avoir une réflexion voisine de 99 %. Au contraire dans le système AlCOH-SiO₂, la différence entre les indices de réfraction est voisine de 0,22, il est alors nécessaire de déposer 34 couches pour obtenir la réflexion de 99 %.

L'inhomogénéité moyenne des épaisseurs déposées varie entre 0,5 et 2 % pour une seule couche.

Enfin, on notera que l'emploi de certains tensio-actifs non ioniques dans les solutions colloïdales permet d'obtenir des films bien uniformes. Les tensio-actifs non ioniques préférés selon l'invention sont choisis parmi les alkyls phénoxy polyéthoxy éthanols (par exemple ceux de marque déposée Triton-X fabriqués chez Rohm & Hass Corporation) ou un polyglycol éther (par exemple celui de marque déposée Tergitol fabriqué par Union Carbide Corporation). De préférence, ces tensio-actifs non ioniques sont utilisés à raison de 10 à 50 mg par litre de suspension colloïdale.

Les miroirs diélectriques réalisés selon la présente invention révèlent une tenue au flux laser particulièrement intéressante. Ainsi, les systèmes TiO₂-SiO₂, TiO₂-CaF₂ ou TiO₂-MgF₂ donnent des seuils de dommage laser assez faibles pour le proche infrarouge (2 à 4 J/cm²), Les systèmes ZrO₂-SiO₂, HfO₂-SiO₂ et Nb₂O₅-SiO₂ donnent des valeurs modérées (10 à 15 J/cm²) tandis que les couples AlCOH-SiO₂, ThO₂-SiO₂ et Ta₂O₅-SiO₂ donnent des résistances laser très importantes (35 à 50 J/cm²). Toutes ces valeurs de tenues au flux laser ont été mesurées avec des impulsions de 16 ns et une fréquence de 30 Hz. Les performances de résistance au flux laser de ces miroirs selon l'invention sont tout à fait comparables aux performances des miroirs classiques voir même largement supérieures dans le cas du couple AlOOH-SiO₂.

Des exemples de modes de réalisation vont maintenant être donnés à titre illustratif.

### Exemple 1

On a répliqué un substrat 2 douci en verre (marque déposée BK-7 fabriquée par la Société Schott), d'un diamètre de 200 mm et d'une épaisseur de 25 mm, par application d'une résine époxyde de type glycidyl-éther cycloaliphatique, selon le procédé de Assus. On obtient une surface de résine moulée d'une épaisseur d'environ 60 µm, d'une planéité moyenne de λ/10 à une longueur d'onde λ de 633 nm et d'une rugosité de 15 Å rms. L'agent de démoulage était dans ce cas une pellicule d'or déposée par métallisation sous vide. On a pu ainsi comparer avec l'emploi d'un agent chimique de démoulage. Ensuite, le substrat répliqué reçoit un nettoyage doux avec un chiffon imbibé d'alcool isopropylique filtré à 0,2 µm.

On hydrolyse rapidement dans 750 g d'eau désionisée (41,7 moles) 91,5 g de tétraisopropoxyde de titane (0,32 mole) distillé à 45°C sous une pression de 0,05 torr (6,66 Pa). Lorsque la précipitation de l'oxyde hydraté est complète, on distille l'isopropanol produit à 82°C et sous une pression de 760 torrs (10⁵ Pa) jusqu'à épuisement de cet alcool. Lorsque la température de reflux atteint 100°C, on ajoute alors un mélange de 8,8 g de tétraméthylammonium hydroxyde (0,019 mole) ou 2,35 g de diéthylamine (0,032 mole) dans 55 g d'isopropanol. On place alors la solution sous insolation UV (lampe à vapeurs de mercure à basse pression) et l'on maintient cette solution en reflux total durant 8 heures. On obtient alors une solution colloidale bleutée et translucide comprenant des particules monodispersées de TiO₂ anatase, rectangulaires d'une longueur comprise entre 10 et 20 nm et d'une largeur d'environ 5 nm. Le sol obtenu d'un pH voisin de 12 est concentré jusqu'à 25 % en oxyde (103 g) puis redilué à 3,5 % par un ajout de méthanol pur. Le sol obtenu est stable pendant plusieurs mois. Il sera dénommé ci-après sol A.

On mélange 697,5 g d'éthanol pur avec 91,15 g de tétraéthoxy silane (0,44 mole) distillé à 167°C, sous une pression de 760 torrs (10⁵ Pa). On ajoute alors 24,2 g d'hydroxyde d'ammonium (28 % NH₃, 0,4 mole) et on réalise l'hydrolyse pendant 48 heures à 25°C. On obtient alors un sol opalescent contenant des sphères de silice amorphe, de 20 nm de diamètre et d'une concentration de 3,3 %. Ce sol a un pH voisin de 10,5 et on le fait refluer sous vide pendant 24 heures afin d'éliminer l'ammoniac dissout jusqu'à obtenir un pH voisin de 6,0. On dilue alors avec de l'éthanol jusqu'à obtenir 2,0 % en oxyde (SiO₂). Le sol obtenu sera dénommé ci-après sol B.

Sur le substrat répliqué 2 nettoyé, on applique tout d'abord à une vitesse de 445 tr/min, le sol A filtré sur membrane PTFE à 0,2 µm, puis l'on procède à un séchage pendant 15 à 20 min à une température voisine de 60°C, sous lampe infrarouge. On procède alors au dépôt du sol B filtré de façon identique au sol A, à une vitesse de 540 tr/min. On répète alors l'étape de séchage. Afin d'élaborer un miroir multicouches, on a réalisé un dépôt de 15 couches alternées de SiO₂ et de TiO₂. On obtient une réflexion de 98,8 ± 1 % à 1053 nm, sur un diamètre utile de 180 mm. Dans ce miroir les monocouches TiO₂ et SiO₂ ont respectivement des indices de réfraction de 1,85 et de 1,22 à 1053 nm. Ces couches ont une porosité de l'ordre de 50 à 55 %.

### Exemple 2

Sur un substrat identique à celui de l'exemple 1, dont l'une des faces a été repliquée de la même façon que dans l'exemple 1 et présentant une planéité finale de λ/11 à une longueur d'onde λ de 633 nm, on effectue un nettoyage doux à l'isopropanol filtré à 0,2 µm.

On hydrolyse vigoureusement 246 g de sec-butoxyde d'aluminium (1,0 mole) dans 3 000 g d'eau désionisée (166 moles à 65°C). On obtient alors un précipité blanchâtre volumineux d'oxyde d'aluminium hydraté. On extrait alors par distillation l'isobutanol à 98°C et à une pression de 760 torrs (10⁵ Pa) et on porte l'ensemble à reflux à 100°C. On peptise alors le précipité par ajout de 7,0 g d'acide chlorhydrique concentré (0,07 mole) et on maintient sous reflux total pendant 15 heures environ. On obtient alors un sol colloidal finement divisé d'aspect opalescent contenant des particules d'alumine bohémite de morphologie parallèlipipédique (40 nm x 20 nm x 50 nm). Le milieu colloïdal est monodispersé. Ce sol d'alumine-γ hydraté est concentré sous vide jusqu'à une concentration de 5 % en Al₂O₃ (1020 gl). On passe ensuite d'un pH de 3,5 à un pH final de 5,5, sans perdre en stabilité colloïdale, en utilisant un procédé de désacidification sur résine échangeuse d'ions (marque Amberlite IRA-93 SP fabriquée par la Société Rohm et Hass). Le sol est alors davantage concentré jusqu'à 12 % d'Al₂O₃ (425 g). On obtient un produit sous forme d'une pâte gélatineuse que l'on peut aisément redisperser sous ultrasons dans des alcools aliphatiques légers. On peut alors refluidifier ce sol par dilution à 3,5 % d'Al₂O₃ dans du méthanol pur. Le sol d'alumine obtenu est enfin additionné d'un peu d'agent tensio-actif non ionique Triton-X 100 (marque déposée), à raison de 10 mg/l et filtré sur un tamis en fibre de verre. Le sol obtenu tend à s'épaissir après 2 semaines de stockage et sera dénommé ci-après sol A.

On synthétise un sol de silice de façon identique à celui de l'exemple 1. Toutefois on ne fait pas refluer ce sol et il reste donc basique à un pH voisin de 10,5. Ce sol est dilué à 1,5 % de silice dans l'éthanol puis filtré sur une membrane en PTFE (PolyTétrafluoroEthylène) ou PVDF (PolyFluorure de VinyliDène). Le sol obtenu est dénommé sol B.

Sur le substrat repliqué 2 nettoyé, on dépose par épandage centrifuge une première couche de sol B à raison de 350 tr/min, puis une couche de sol A à raison de 800 tr/min. Entre le dépôt de chaque couche, on réalise une étape de séchage de 5 à 10 minutes sous une lampe infrarouge à une température voisine de 60°C. Après avoir déposé 34 couches alternées de SiO₂ et de Al₂O₃, on mesure les réflexions à une incidence de 0°, celles-ci sont de 99,0 ± 0,7 % à une longueur d'onde de 1053 nm et de 98,3 ± 1,0 % à une longueur d'onde de 351 nm.

Dans ce miroir diélectrique exempt de toute craquelure, les monocouches de SiO₂ et de Al₂O₃ ont des indices de réfraction respectifs 1,22 et 1,44 à 1 053 nm, et des porosités respectives de 50 % et 35 %.

### Exemple 3

Un substrat en verre borosilicate de marque déposée Duran 50 (fabriquée par la Société Schott), d'un diamètre de 200 mm et d'une épaisseur de 25 mm est répliqué par l'empreinte d'un substrat maître en silice avec une résine du type diglycidyl-éther bisphénolique. On utilise le procédé décrit par Mahé et Marioge et dont les références bibliographiques ont été données précédemment. On obtient une surface moulée en résine d'une épaisseur de 30 µm, d'une planéité de λ/10 à une longueur d'onde λ de 633 nm et d'une rugosité de 10 A rms. Dans cette procédure, l'agent de démoulage est un polymère à base de silanes. Le substrat répliqué 2 obtenu est alors nettoyé à l'isopropanol filtré à 0,2 µm.

On prépare un sol d'alumine de façon identique à ce qui a été décrit dans l'exemple 2, sauf que le sol acide est concentré jusqu'à 15 % en Al₂O₃, de façon à obtenir une pâte, puis redispersé finement par dilution à 2,6 % en oxyde dans du méthanol pur. On désacidifie ce sol colloidal jusqu'à un pH de 3,5 par addition d'un composé époxyde soluble tel que l'oxyde de propylène. Pour obtenir une désacidification convenable, il est nécessaire que le rapport moléculaire époxy/acide soit compris entre 1:2 et 1:1. Le sol obtenu reste fluide pendant plusieurs mois et peut être très aisément filtré sur un tamis en fibre de verre. Ce sol obtenu sera dénommé ci-après sol A.

Un sol de silice est préparé de façon similaire à ce qui a été décrit dans l'exemple 2 sauf que la concentration finale passe à 1,65 %. La filtration peut être réalisée sur un tamis en fibre de verre ou une membrane en PTFE ou en PVDF.

Sur le substrat répliqué 2 nettoyé, on dépose tout d'abord le sol B à raison de 400 tr/min par épendage centrifuge puis le sol A à raison de 600 tr/min. Après chaque dépôt de sol A, on traite le film pendant 10 minutes dans des vapeurs d'ammoniac. Après chaque dépôt de sol B, on laisse cette couche à l'air libre pendant 10 min. On répète cette procédure plusieurs fois jusqu'à obtenir un miroir présentant 36 couches au total, c'est-à-dire 18 couches de SiO₂ alternées avec 18 couches d'Al₂O₃. Ce miroir révèle une réponse spectrale trichroique. Les réflexions mesurées à une incidence de 0° sont de 99,2 ± 1,0 % à une longueur d'onde de 1 053 nm, de 90,0 ± 1,5 % à une longueur d'onde de 530 nm et de 85,0 ± 1,5 % à 351 nm.

Ce film trichroique exempt de craquelure et ne révélant pas d'inhomogénéité importante est constitué de monocouches de SiO₂ et d'Al₂O₃ aux caractéristiques identiques à celles de l'exemple 2. Exemple 4

Les sols A et B sont réalisés de façon identique à ce qui a été décrit dans l'exemple 3.

Ensuite, on applique le sol B par épendage centrifuge à une vitesse de 330 tr/min puis le sol A à une vitesse de 510 tr/min. On réalise ainsi 24 couches au total de SiO₂ et de Al₂O₃. Le miroir obtenu fonctionne à une incidence de 37° et donne comme réflexion en polarisation perpendiculaire "s", 98,1 ± 1,0 % à une longueur d'onde de 1 053 nm, 88,3 ± 2,0 % à une longueur d'onde de 527 nm et 87,4 ± 2,5 % à une longueur d'onde de 351 nm.

Le miroir obtenu est uniforme et exempt de craquelure. A une incidence de 0°, ce composant perd près de 15 % en réflexion aux trois longueurs d'onde précitées.

Dans les 4 exemples qui viennent d'être cités, la planéité moyenne des substrats avant le traitement sol-gel était de λ/10 à une longueur d'onde λ de 633 nm. Le traitement induit une légère dégradation de l'état de surface et la planéité moyenne du miroir achevé varie entre λ/7 et λ/8 à 633 nm.

## Revendications

1. Miroir diélectrique interférentiel comprenant un substrat plan (2) recouvert d'au moins une première couche (6) de colloïdes, et d'au moins une deuxième couche (8) de colloïdes, la première couche (6) ayant un indice de réfraction inférieur à celui de la deuxième couche (8), ces deux types de couches (6, 8) étant disposés de façon alternée caractérisé en ce que le substrat plan est un substrat plan douci dont la surface de recouvrement comporte une couche (4) d'une résine thermoplastique moulée par replication.

2. Miroir diélectrique interférentiel selon la revendication 1, caractérisé en ce que les colloïdes de la première couche (6) sont choisis parmi l'oxyde de silicium, le fluorure de calcium ou le fluorure de magnésium.

3. Miroir diélectrique interférentiel selon la revendication 1, caractérisé en ce que les colloides de la deuxième couche (8) sont choisis parmi les oxydes de titane, d'aluminium, de zirconium, d'hafnium, de thorium, de tantale, de niobium, d'yttrium, de scandium ou de lanthane.

4. Miroir diélectrique interférentiel selon la revendication 1, caractérisé en ce que les colloïdes de la première couche (6) sont constitués par l'oxyde de silicium et en ce que les colloides de la deuxième couche (8) sont constitués par l'oxyde d'aluminium.

5. Miroir diélectrique interférentiel selon l'une des revendications 1 à 4, caractérisé en ce que les colloïdes des deux couches (6, 8) sont d'un diamètre compris entre 5 et 40 nm environ.

6. Miroir diélectrique interférentiel selon l'une quelconque des revendications précédentes, caractérisé en ce que l'épaisseur des deux types de couche (6, 8) varie entre 50 nm et 250 nm.

7. Miroir diélectrique interférentiel selon la revendication 1, caractérisé en ce que la résine thermoplastique (4) est choisie parmi les résines du type époxyde, diglycidyl-éther bisphénolique, glycidyl-ester, glycidyl-amide, glycidyl-amine, silicone-glycidyle, thioglycidyle ou fluoroglycidyle.

8. Miroir diélectrique interférentiel selon les revendications 1 ou 7, caractérisé en ce que l'épaisseur de la résine thermoplastique (4) varie entre 20 et 100 µm environ.

9. Miroir diélectrique interférentiel selon l'une quelconque des revendications précédentes, caractérisé en ce qu'au moins l'une des deux couches (6, 8) déposées sur le substrat (2) comprend un agent tensio-actif non ionique.

10. Miroir diélectrique interférentiel selon la revendication 9, caractérisé en ce que l'agent tensio-actif non ionique est choisi parmi les alkyl phénoxy polyéthoxy éthanol ou les polyglycol éthers.

11. Miroir diélectrique interférentiel selon la revendication 9 ou 10, caractérisé en ce que la concentration en agent tensio-actif varie entre 10 et 50 mg par litre de la suspension de colloïdes utilisée pour fabriquer les couches (6, 8).

12. Procédé de fabrication d'un miroir diélectrique interférentiel selon l'une des revendications 1 à 11, caractérisé en ce qu'il consiste à :
- revêtir un substrat maître (10) d'un agent de démoulage,
- emprisonner entre le substrat maître (10) et un substrat plan douci (2) une résine thermoplastique (4),
- polymériser et réticuler ladite résine (4),
- séparer le substrat maître (10) du substrat répliqué (2),
- préparer une première suspension colloidale (6),
- préparer une deuxième suspension colloidale de colloïdes (8) à indice de réfraction supérieur à celui de la première suspension (6),
- déposer sur le substrat répliqué (2), à température ambiante, alternativement une couche de chaque suspension colloïdale (6, 8),
- procéder au séchage de chaque couche (6, 8) après son dépôt.

13. Procédé de fabrication d'un miroir diélectrique interférentiel selon la revendication 12, caractérisé en ce que la première suspension colloïdale (6) comprend des colloïdes choisis parmi l'oxyde de silicium, le fluorure de calcium ou le fluorure de magnésium et dispersés dans un solvant.

14. Procédé de fabrication d'un miroir diélectrique interférentiel selon la revendication 12, caractérisé en ce que la deuxième suspension colloïdale (8) comprend des colloïdes choisis parmi l'oxyde d'aluminium, l'oxyde de titane, l'oxyde de zirconium, l'oxyde d'hafnium, l'oxyde de thorium, l'oxyde de tantale, l'oxyde de niobium, l'oxyde d'yttrium, l'oxyde de scandium ou l'oxyde de lanthane et dispersés dans un solvant.

15. Procédé de fabrication d'un miroir diélectrique inteférentiel selon la revendication 13 ou 14, caractérisé en ce que le solvant est choisi parmi les alcools aliphatiques saturés de formule ROH où R représente un alkyle ayant de 1 à 4 atomes de carbone.

16. Procédé de fabrication d'un miroir diélectrique interférentiel selon la revendication 12, caractérisé en ce que le dépôt des couches de colloïdes (6, 8) est effectué par enduction centrifuge.

17. Procédé de fabrication d'un miroir diélectrique interférentiel selon la revendication 12, caractérisé en ce que l'agent de démoulage (12) est choisi parmi les silicones, les polymères fluorés ou les sucroses.

18. Procédé de fabrication d'un miroir diélectrique interférentiel selon la revendication 12, caractérisé en ce que la résine thermoplastique (4) est choisie parmi les résines du type époxyde, diglycidyl-éther bisphénolique, glycidyl-ester, glycidyl-amide, glycidyl-amine, silicone-glycidyle, thioglycidyle ou fluoroglycidyle.

19. Procédé de fabrication d'un miroir diélectrique interférentiel selon la revendication 12, caractérisé en ce que le séchage est effectué à une température d'environ 60°C.

## Patentansprüche

1. Dielektrischer Interferenzspiegel, ein flaches Substrat (2) umfassend, bedeckt von wenigstens einer ersten Schicht aus Kolloiden (6) und wenigstens einer zweiten Schicht aus Kolloiden (8), wobei die erste Schicht (6) einen kleineren Brechungsindex aufweist als die zweite Schicht (8) und diese beiden Schichttypen (6, 8) abwechselnd angeordnet sind,
**dadurch gekennzeichnet,**
daß das ebene Substrat ein geschliffenes bzw. poliertes flaches Substrat ist, dessen Deckfläche eine Schicht (4) aus einem durch Replizieren geformten thermoplastischen Harz umfaßt.

2. Dielektrischer Interferenzspiegel nach Anspruch 1, dadurch gekennzeichnet, daß die Kolloide der ersten Schicht (6) ausgewählt werden unter Siliciumoxid, Calciumfluorid oder Magnesiumfluorid.

3. Dielektrischer Interferenzspiegel nach Anspruch 1, dadurch gekennzeichnet, daß die Kolloide der zweiten Schicht (8) ausgewählt werden unter den Oxiden von Titan, Aluminium, Zirkonium, Hafnium, Thorium, Tantal, Niobium, Yttrium, Scandium oder Lanthan.

4. Dielektrischer Interferenzspiegel nach Anspruch 1, dadurch gekennzeichnet, daß die Kolloide der ersten Schicht (6) gebildet werden durch Siliciumoxid und dadurch, daß die Kolloide der zweiten Schicht (8) gebildet werden durch Aluminiumoxid.

5. Dielektrischer Interferenzspiegel nach einem der Ansprüche 1 bis 4, dadurch gekennzeichnet, daß die Kolloide der beiden Schichten (6, 8) einen zwischen ungefähr 5 und 40 nm enthaltenen Durchmesser haben.

6. Dielektrischer Interferenzspiegel nach einem der vorangehenden Ansprüche, dadurch gekennzeichnet, daß die Dicke der beiden Schichttypen (6, 8) zwischen 50 nm und 250 nm variiert.

7. Dielektrischer Interferenzspiegel nach Anspruch 1, dadurch gekennzeichnet, daß das thermoplastische Harz (4) ausgewählt wird unter den Harzen des Typs Epoxyd, BiphenolDiglycidylether, Glycidylester, Glycidylamid, Glycidylamin, Siliconglycidyl, Thioglycidyl oder Fluorglycidyl.

8. Dielektrischer Interferenzspiegel nach den Ansprüchen 1 oder 7, dadurch gekennzeichnet, daß die Dicke der thermoplastischen Schicht (4) ungefähr zwischen 20 und 100 µm variiert.

9. Dielektrischer Interferenzspiegel nach einem der vorangehenden Ansprüche, dadurch gekennzeichnet, daß wenigstens eine der beiden auf das Substrat (2) aufgebrachten Schichten ein nichtionisches Netzmittel enthält.

10. Dielektrischer Interferenzspiegel nach Anspruch 9, dadurch gekennzeichnet, daß das nichtionische Netzmittel ausgewählt wird unter den Alkyl-phenoxy-polyethoxy-ethanol- oder den Polyglykol-Ethern.

11. Dielektrischer Interferenzspiegel nach Anspruch 9 oder 10, dadurch gekennzeichnet, daß die Netzmittelkonzentration zwischen 10 und 50 mg pro Liter der zur Herstellung der Schichten (6, 8) verwendeten Kolloidesuspension variiert.

12. Herstellungsverfahren eines dielektrischen Interferenzspiegels nach einem der Ansprüche 1 bis 11, dadurch gekennzeichnet, daß es aus folgenden Schritten besteht:
- Überziehen eines Master-Substrats (10) mit einem Formtrennmittel,
- Einschließen eines thermoplastischen Harzes (4) zwischen dem Master-Substrat (10) und einem geschliffenen bzw. polierten flachen Substrat (2),
- Polymerisieren und Vernetzen des Harzes (4),
- Trennen des Master-Substrats (10) vom replizierten Substrat (2),
- Vorbereiten einer ersten kolloidalen Suspension (6),
- Vorbereiten einer zweiten kolloidalen Suspension aus Kolloiden (8) mit einem höheren Brechungsindex als dem der ersten Suspension (6),
- Aufbringen, bei Umgebungstemperatur und abwechselnd, einer Schicht aus jeder kolloiden Suspension (6, 8),
- Durchführen der Trocknung jeder Schicht (6, 8) nach ihrer Aufbringung.

13. Herstellungsverfahren eines dielektrischen Interferenzspiegels nach Anspruch 12, dadurch gekennzeichnet, daß die erste kolloidale Suspension (6) Kolloide enthält, die ausgewählt werden unter Siliciumoxid, Calciumfluorid oder Magnesiumfluorid und dispergiert werden in einem Lösungsmittel.

14. Herstellungsverfahren eines dielektrischen Interferenzspiegels nach Anspruch 12, dadurch gekennzeichnet, daß die zweite kolloidale Suspension (8) Kolloide enthält, die ausgewählt werden unter den Oxiden von Aluminium, Titan, Zirkonium, Hafnium, Thorium, Tantal, Niobium, Yttrium, Scandium oder Lanthan und dispergiert werden in einem Lösungsmittel.

15. Herstellungsverfahren eines dielektrischen Interferenzspiegels nach Anspruch 13 oder 14, dadurch gekennzeichnet, daß das Lösungsmittel ausgewählt wird unter den gesättigten aliphatischen Alkoholen der Formel ROH, wo R ein Alkyl darstellt, das 1 bis 4 Kohlenstoffatome hat.

16. Herstellungsverfahren eines dielektrischen Interferenzspiegels nach Anspruch 12, dadurch gekennzeichnet, daß das Aufbringen der Kolloidschichten (6, 8) mittels Zentrifugal- bzw. Schleuderbeschichtung erfolgt.

17. Herstellungsverfahren eines dielektrischen Interferenzspiegels nach Anspruch 12, dadurch gekennzeichnet, daß das Formtrennmittel (12) ausgewählt wird unter den Siliconen, den fluorierten Polymeren oder den Sucrosen.

18. Herstellungsverfahren eines dielektrischen Interferenzspiegels nach Anspruch 12, dadurch gekennzeichnet, daß das thermoplastische Harz (4) ausgewählt wird unter den Harzen des Typs Epoxyd, Biphenol-Diglycidylether, Glycidylester, Glycidylamid, Glycidylamin, Siliconglycidyl, Thioglycidyl oder Fluorglycidyl.

19. Herstellungsverfahren eines dielektrischen Interferenzspiegels nach Anspruch 12, dadurch gekennzeichnet, daß die Trocknung bei einer Temperatur von ungefähr 60°C durchgeführt wird.

## Claims

1. Interferential dielectric mirror, comprising a planar, substrate (2), covered with at least one first layer (6) of colloids and at least one second layer (8) of colloids, the first layer (6) having a refractive index below that of the second layer (8), said two types of layers (6,8) being arranged in alterniting manner, characterized in that the planar substrate is a ground, planar substrate, whose covering surface has a layer (4) of a thermoplastic resin moulded by replication.

2. Interferential dielectric mirror according to claim 1, characterized in that the folloids of the first layer (6) are chosen from among silicon oxide, calcium fluoride or magnesium fluoride.

3. Interferential dielectric mirror according to claim 1, characterized in that the colloids of the second layer (8) are chosen from among oxides of titanium, aluminium_{,} zirconium hafnium, thorium, tantalum, niobium, yttrium, scandium or lanthanum.

4. Interferential dielectric mirror according to claim 1, characterized in that the colloids of the first layer (6) are constituted by silicon oxide and the colloids of the second layer (8) by alumina.

5. Interferential dielectric mirror according to claim 1, characterized in that the colloids of the two layers have a diameter between to proximately 5 and 40 nm.

6. Interferential dielectric mirror according to claim 1, characterized in that the thickness of these two types of layer varies between 50 and 250 nm.

7. Interferential dielectric mirror according to claim 1, characterized in that the thermoplastic resin (4) is chosen from among resins of the type epoxy, bisphenol diglycidyl-ether, glycidyl-ester, glycidyl-amide, glycidyl-amine, silicone-glycidyl, thioglycidyl or fluoroglycidyl.

8. Interferential dielectric mirror according to claim 1, characterized in that the thickness of the thermoplastic resin (4) varies between approximately 20 and 100 µm.

9. Interferential dielectric mirror according to claim 1, characterized in that at least one of the two layers deposited on the substrate (2) incorporates a nonionic surfactant.

10. Interferential dielectric mirror according to claim 9, characterized in that the nonionic surfactant is chosen from among alkyl phenoxy polyethoxy ethanol or polyglycol ethers.

11. Interferential dielectric mirror according to claim 9 or 10, characterized in that the surfactant concentration varies between 10 and 50 mg/litre of suspension of colloids used for producing the layers.

12. Process for the production of an interferential dielectric mirror according to any one of the claims 1 to 11, characterized in that it consists of:
- coating a master substrate (10) with a demoulding agent,
- trapping a thermoplastic resin (4) between the master substrate (10) and a planar, ground substrate (2),
- polymerizing and crosslinking the said resin (4),
- separating the master substrate (10) from the replicated substrate (2),
- preparing a first colloidal suspension (6),
- preparing a second colloidal suspension of colloids (8) having a refractive index higher than that of the first suspension (6),
- depositing on the replicated substrate (2), at ambient temperature, alternately a layer of each colloidal suspension (6, 8),
- drying each layer (6, 8) following its deposition.

13. Process for the production of an interferential dielectric mirror according to claim 12, characterized in that the first colloidal suspension (6) incorporates colloids chosen from among silicon oxide, calcium fluoride or magnesium fluoride and dispersed in a solvent.

14. Process for the production of an interferential dielectric mirror according to claim 12, characterized in that the second colloidal suspension (8) incorporates colloids chosen from among the oxides of aluminium, titanium, zirconium, hafnium, thorium, tantalum, niobium, yttrium, scandium or lanthanum and dispersed in a solvent.

15. Process for the production of an interferential dielectric mirror according to claim 13 or 14, characterized in that the solvent is chosen from among saturated aliphatic alcohols of formula ROH, in which R stands for an alkyl with 1 to 4 carbon atoms.

16. Process for the production of an interferential dielectric mirror according to claim 12, characterized in that the deposition of the layers of colloids (6, 8) takes place by centrifugal coating.

17. Process for the production of an interferential dielectric mirror according to claim 12, characterized in that the demoulding agent (12) is chosen from among silicones, fluorinated polymers or sucroses.

18. Process for the production of an interferential dielectric mirror according to claim 12, characterized in that the thermoplastic resin (4) is chosen from among resin of the following types: epoxy, bisphenol diglycidyl-ether, glycidyl-ester, glycidyl-amide, glycidyl-amine, silicone-glycidyl, thioglycidyl or fluoroglycidyl.

19. Process for the production of an interferential dielectric mirror according to claim 12, characterized in that drying takes place at a temperature of approximately 60°C.
